# EUROPÄISCHE PATENTSCHRIFT

(11) **EP 2 443 435 B1**
(45) Veröffentlichungstag und Bekanntmachung des Hinweises auf die Patenterteilung: **17.04.2013**
(21) Anmeldenummer: 10725680.2
(22) Anmeldetag: 16.06.2010
(51) Int. Cl.: G01N 21/03, G01N 21/77, G02B 6/122, G02B 6/136

(54) **VERFAHREN ZUM ERZEUGEN EINES BEREICHES MIT ERHÖHTEM BRECHUNGSINDEX UND ENTSPRECHENDES SUBSTRAT**
METHOD FOR PRODUCING AN AREA WITH AN ELEVATED REFRACTIVE INDEX, AND CORRESPONDING SUBSTRATE
PROCÉDÉ PERMETTANT DE PRODUIRE UNE ZONE PRÉSENTANT UN INDICE DE RÉFRACTION PLUS ÉLEVÉ ET SUBSTRAT CORRESPONDANT

(30) Priorität: 16.06.2009 DE 102009025072
(43) Veröffentlichungstag der Anmeldung: 25.04.2012
(73) Patentinhaber: Fraunhofer Gesellschaft zur Förderung der angewandten Wissenschaft E.V., 80686 München (DE)
(72) Erfinder: BOLLMANN, Dieter, 81475 München (DE); STROHHÖFER, Christof, 34123 Kassel (DE); FEIL, Michael, 81475 München (DE)
(74) Vertreter: Schenk, Markus
(86) Internationale Anmeldenummer: PCT/EP2010/058445
(87) Internationale Veröffentlichungsnummer: WO 2010/146077

(56) Entgegenhaltungen:
- EP-A2- 1 890 130
- US-A- 5 832 165
- US-A- 5 882 571
- US-A1- 2005 244 123
- JIANGUO CHEN ET AL: "An experimental study of the fabrication of polycarbonate optical waveguides" PROCEEDINGS OF THE INTERNATIONAL SOCIETY FOR OPTICAL ENGINEERING (SPIE), SPIE, USA LNKD- DOI:10.1117/12.804769, Bd. 7158, 1. Januar 2008 (2008-01-01), Seiten 71580Y-1-71580Y-7, XP007914762 ISSN: 0277-786X [gefunden am 2009-02-01]
- GUPTA M ET AL: "Fabrication and characterization of polycarbonate thin film optical waveguides" JOURNAL OF OPTICS, MASSON EDITEUR. PARIS, FR, Bd. 28, Nr. 1, 1. Februar 1997 (1997-02-01), Seiten 37-40, XP007914765 ISSN: 0150-536X

## Beschreibung

Die vorliegende Erfindung befasst sich mit einem Verfahren zum Erzeugen eines Bereiches mit erhöhtem Brechungsindex und ein Substrat mit örtlich variablem Brechungsindex.

Bei der optischen Kopplung verschiedener Bauelemente spielen Lichtwellenleiter eine bedeutende Rolle. Lichtwellenleiter sind dadurch gekennzeichnet, dass sie einen im Vergleich zur Umgebung höheren optischen Brechungsindex aufweisen, so dass Licht, wenn es sich entlang des Lichtwellenleiters ausbreitet, infolge der Totalreflexion innerhalb des Wellenleiters verbleibt. Da die Totalreflexion erst unterhalb eines Grenzwinkels auftritt, spielt neben den verwendeten Materialien auch die geometrische Ausgestaltung des Lichtwellenleiters eine große Rolle.

Insbesondere in der Optoelektronik werden häufig verschiedene Bauelemente, die sich auf einem Substrat befinden, mittels eines Lichtwellenleiters miteinander gekoppelt. Dazu wird beispielsweise zunächst durch ein Einfräsen oder durch ein Ausbilden von Ausnehmungen in dem Substrat die Lage des Lichtwellenleiters definiert. Anschließend werden in einem zweiten Arbeitsschritt die so gebildeten Kanäle mit Lichtwellenleitermaterial aufgefüllt (z.B. mit Harz) bzw. es werden Lichtwellenleiter in die Kanäle hineingelegt. Diese Herangehensweise ist beispielsweise in EP 0402797 oder in WO 01/98759 beschrieben. Ein Nachteil dieser Herangehensweise besteht darin, dass zur Ausbildung der Lichtwellenleiter in dem Substrat zwei Arbeitsschritte erforderlich sind:
1. Das Ausbilden von Kanälen innerhalb des Substrats und
2. das Einbringen von Lichtwellenleitern in die vorher gefertigten Kanäle.

Bei dieser Herangehensweise unterscheidet sich das Lichtwellenleitermaterial von Substratmaterial.

Um die geschilderte Herangehensweise zu vereinfachen, wurde in Z. Liu, N. Srisanit, X. Ke. P. Wu S. Song, J.J. Yang und M. R. Wang: "An azobenzene functionalized polymer for laser direct writing waveguide fabrication" Optical Communication 273 (2007) 99-98 als Substratmaterial ein spezielles Polymer vorgeschlagen, wobei der Lichtwellenleiter durch ein Laserschreiben in das Polymer erzeugt wird. Bekannt ist ebenfalls, PMMA (Polymethylmetacrylat, Plexiglas) als mögliches Polymer zu nutzen. Beim Laserschreiben werden jedoch die Polymere (z.B. PMMA) aufgeschäumt, so dass sich eine nicht-planare Oberflächentopographie bildet. Ein weiterer Nachteil ist, dass PMMA nur unzureichend biokompatibel und dass es für medizinische Wegewerfprodukte nur begrenzt einsetzbar ist.

Die Druckschrift EP-1890130-A2 offenbart eine auf evaneszenter Lumineszenzanregung basierende Sensor-Plattform mit Wellenleiterregionen auf einem Polycarbonat-Substrat.

US-5,882,571 offenbart eine Sensor-Plattform mit einem Mikrokanal, der durch LaserAblation in einem Substrat hergestellt wird. Das Substrat kann Polycarbonat beinhalten.

Ausgehend von diesem Stand der Technik liegt der vorliegenden Erfindung die Aufgabe zugrunde, in einem biokompatiblen Substrat den Brechungsindex lokal mit einer vereinfachten Prozessierung zu ändern.

Diese Aufgabe wird durch ein Verfahren nach Anspruch 1 oder ein Substrat nach Anspruch 6 gelöst.

Der vorliegenden Erfindung liegt der Gedanke zugrunde, dass bei Verwendung von Polycarbonat als Substratmaterial Lichtwellenleiter innerhalb des Substrats mittels einer Bestrahlung des Substratmaterials erzeugt werden können. Dabei wird das Substrat entlang jener Region bestrahlt, in der ein Lichtwellenleiter ausgebildet werden soll. Das umgebende Substratmaterial wird dabei nicht oder nicht in dem Maße bestrahlt, wie es zur Erhöhung des Brechungsindexes erforderlich wäre. Daher weisen nur die (ausreichend) bestrahlten Regionen des Polycarbonats einen höheren Brechungsindex auf. Das hat zur Folge, dass die bestrahlte Region einen Lichtwellenleiter bildet, dessen Lage und Ausrichtung einfach durch die Bestrahlung beeinflusst werden kann. Ein Verfahren zum Erzeugen eines Lichtwellenleiters umfasst somit das Bereitstellen eines Substrats aus Polycarbonat und das Erzeugen des Lichtwellenleiters im Substrat durch eine Bestrahlung.

Zur Bestrahlung kann beispielsweise ein Laser genutzt werden, so dass Lichtwellenleiter auf einem eng fokussierten Bereich ausgebildet werden können. Laserstrahlung ist überdies vorteilhaft, da sie monochromatisches Licht ausstrahlt, die derart gewählt werden kann, dass die Ausbildung des Lichtwellenleiters innerhalb des Polycarbonats erleichtert wird. Ferner kann das Laserlicht beispielsweise hinsichtlich der Pulsfrequenz angepasst werden, so dass die eingestrahlte Energiemenge so gewählt ist, dass sich innerhalb des Polycarbonats ein Lichtwellenleiter herausbildet, der beispielsweise auch eine vorbestimmte Tiefe (gemessen von der bestrahlten Oberfläche) aufweist. Alternativ ist es möglich, beispielsweise unter Nutzung einer Maske das gesamte Substrat mit einer Licht- oder Strahlungsquelle zu bestrahlen, so dass die Maske die Lage des Lichtwellenleiters definiert.

Die Verwendung von Polycarbonat als Substratmaterial ist vorteilhaft, da es beispielsweise glasklar herstellbar ist und außerdem sehr dimensionsstabil und eine hohe Schlagzähigkeit aufweist. Daher werden Polycarbonate häufig dafür eingesetzt, um einerseits als Schutzschicht zu wirken und gleichzeitig lichtdurchlässig zu sein (z.B. für die Herstellung von CDs oder DVDs oder für die Herstellung von Motorradhelmen). Polycarbonate weisen ferner unterhalb von 400 nm Wellenlänge für die genutzte Bestrahlung eine hohe Absorption auf, sind im sichtbaren Bereich jedoch zu 80-90% transparent. Oberhalb einer Wellenlänge von 1,4 µm ist ebenfalls eine erhöhte Absorption feststellbar, so dass bei ca. 2,4 µm die Transparenz nur noch ca. 30% beträgt. Die Absorptionseigenschaft des Polycarbonats kann dazu genutzt werden, um eine strukturelle Umwandlung in einen Lichtwellenleiter zu erreichen. Daher kann zur Ausbildung des Lichtwellenleiters beispielsweise UV-Licht mit einer Wellenlänge von unterhalb 450 nm oder unterhalb von 400 nm Wellenlänge eingesetzt werden. Alternativ kann Infrarotstrahlung mit einer Wellenlänge von oberhalb von 1 µm oder oberhalb von 7 µm genutzt werden.

Die Bestrahlung kann daher beispielsweise mittels eines UV-Lasers oder auch eines CO2-Lasers erfolgen. Gleichzeitig kann der Laser auch benutzt werden, um einen Kanal in dem Substrat auszubilden (z. B. durch Ablation), indem Parameter des beispielhaften Lasers geändert werden. Weitere Ausführungsbeispiele nutzen daher den Synergieeffekt, dass durch eine Änderung der Bestrahlung (z.B. Variation der Laserparameter) zum einen ein Kanal selbst ausgebildet werden kann (durch Ablation von Substratmaterial) und zum anderen ein Wellenleiter in einem Oberflächenbereich ausgebildet wird.

Unter Ausnutzung dieses Synergieeffektes befasst sich die Erfindung daher mit der Integration von mikrofluidischen Kanälen und optischen Wellenleitern innerhalb eines optischen Sensors (z.B. zum Detektieren von Analytmolekülen). Um beispielsweise die Wechselwirkung des Lichts mit einer großen Anzahl von Analytmolekülen in dem mikrofluidischen Kanal zu ermöglichen, wird der Fluidkanal in einer Querschnittsebene senkrecht zur Flussrichtung des Fluids von drei Seiten von Material mit erhöhtem Brechungsindex umgeben. Die hochbrechende Schicht fungiert somit als optischer Wellenleiter, so dass mit deren Hilfe das evaneszente Feld des Lichts in Wechselwirkung mit den an (zumindest) drei Seiten des Fluidkanals immobilisierten Analytmolekülen gebracht werden kann. Zur Immobilisierung der Analytmoleküle kann beispielsweise eine Oberflächenbehandlung des Fluidkanals geschehen bzw. eine Oberflächenschicht ausgebildet werden.

Im Vergleich zu PMMA zeigt Polycarbonat bei der Bearbeitung mit einem Laser ein anderes Verhalten. Beispielsweise ist es möglich, mit einem UV-Laser die Ablation (=schlagartiges Verdampfen) zum Ausbilden von Vertiefungen und Gräben zu nutzen, wobei die Wände bei der Verwendung von Polycarbonat eine glatte Struktur aufweisen. Andererseits neigt PMMA viel stärker als Polycarbonat dazu, bei Laserbestrahlung Blasen zu bilden, so dass die Prozessführung zur Vermeidung solcher Blasen bei PMMA deutlich aufwendiger ist. Außerdem absorbiert PMMA erst bei Wellenlängen unterhalb von 300 nm. Ein wesentlicher Vorteil von Polycarbonat im Vergleich zu PMMA besteht jedoch in der Biokompatibilität und der guten Eignung für medizinische Wegwerf- oder Einwegprodukte. Im Gegensatz zu PMMA ist Polycarbonat daher hervorragend in der Medizintechnik einsetzbar und wird wegen der guten Biokompatibilität in zahlreichen medizinischen Einmalprodukten eingesetzt. Die Unterschiede zwischen Polycarbonat und PMMA liegen außerdem in den verschiedenen Materialkonstanten wie beispielsweise Absorptionskoeffizienten und Eindringtiefe bei der verwendeten Laserwellenlänge, Wärmeleistung, Wärmekapazität, Schmelzwärme und Verdampfungswärme des Materials. Dabei verhält sich jede Material-Wellenlänge-Kombination anders. Polycarbonat zeichnet sich ferner durch ein günstiges chemisches Verhalten gegenüber flüssigen, biologischen Proben aus und ist daher bevorzugt. Auch bei der Alterungsbeständigkeit, Witterungsbeständigkeit, der Schlagzähigkeit und der mechanischen Stabilität ist Polycarbonat gegenüber PMMA im Vorteil.

Weitere Vorteile von Ausführungsbeispielen lassen sich wie folgt zusammenfassen. Zum einen führt das direkte Schreiben von Wellenleitern zu einer sehr einfachen Prozessführung, da keine zusätzlichen Materialien auf oder in das Substrat eingebracht werden, um den Wellenleiter herzustellen. Letzteres geschieht beispielsweise bei den oben genannten konventionellen Anordnungen, bei denen Wellenleiter in zuvor ausgebildete Kanäle eingelegt werden. Zum anderen kann der Wellenleiter ebenfalls durch Einwirkung des Schreiblasers aufgrund von Veränderungen des Brechungsindex des Substratmaterials entstehen. Vorteilhaft sind die dadurch mögliche berührungslose Bearbeitung des Substrats, sowie die Unabhängigkeit von speziellen Geometrien oder Topographien. So können dadurch beispielsweise Wellenleiter unter topographischen Strukturen hindurchgeführt werden oder sogar an schrägen Flächen hergestellt werden. Derartige Wellenleiter besitzen ein breites potenzielles Anwendungsspektrum, wie beispielsweise das optische Verbinden in Foliensystemen oder Smart-Cards.

Die Erfindung nutzt ebenfalls die Synergie, die sich aus der Kombination der beiden oben beschriebenen Möglichkeiten, nämlich der Laserablation zur Herstellung von Kanälen und dem direkten Laserschreiben von Wellenleitern ergeben. Opto-fluidische Systeme können somit in einer einheitlichen Prozessierung hergestellt werden, wobei eine Lichtführung um eine Kanalstruktur herum möglich ist.

Vergleichende Beispiele und Ausführungsbeispiele der vorliegenden Erfindung werden nachfolgend Bezug nehmend auf die beiliegenden Zeichnungen näher erläutert. Es zeigen:
- Fig. 1: eine Querschnittsansicht durch ein Substrat aus Polycarbonat.mit einem ausgebildeten Wellenleiter gemäß einem Vergleichenden Beispiel;
- Fig. 2: eine Querschnittsansicht durch einen Fluidkanal für einen Biosensor gemäß einem Ausführungsbeispiel;
- Fig. 3: eine weitere Querschnittsansicht für eine Kombination von Wellenleiter und Fluidkanal gemäß Ausführungsbeispielen;
- Fig. 4: eine schematische Darstellung für die Einwirkung des evaneszenten Feldes auf immobilisierte Moleküle entlang der Kanalwände; und
- Fig. 5: eine Querschnittsansicht für zwei übereinander angeordnete Kanalstrukturen.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibung dieser Funktionselemente in den verschiedenen Ausführungsbeispielen untereinander austauschbar ist.

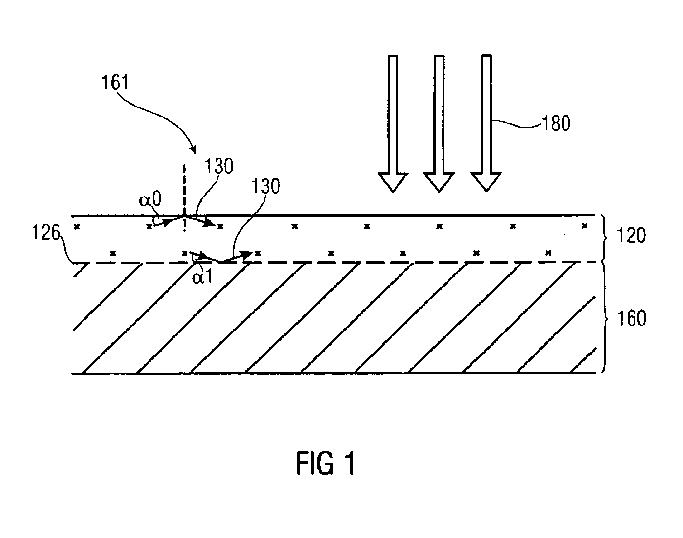

Fig. 1 zeigt ein Vergleichendes Beispiel, wie in einem Bereich 120 der Brechungsindex an einer Oberfläche 161 eines Substrats 160 lokal geändert werden kann. Dazu wird das Substrat 160 beispielsweise einer Strahlung 180 einer bestimmten Wellenlänge ausgesetzt. Beispielsweise kann eine UV-Bestrahlung z.B. mittels eines UV-Lasers zur Wellenleitererzeugung genutzt werden. Wenn das Substratmaterial geeignet gewählt ist, führt das dazu, dass in der bestrahlten Region durch Absorption der elektromagnetischen Energie der Brechungsindex des Substratmaterials sich ändert (z.B. erhöht). Der Bereich 120 mit erhöhtem Brechungsindex kann beispielsweise einen Wellenleiter bilden und da die Änderung lediglich lokal in der bestrahlten Region passiert, wird der beispielhafte Wellenleiter 120 in der bestrahlten Region ausgebildet. Es wird keine extra Wellenleiterschicht aufgebracht - der Wellenleiter entsteht vielmehr aus dem Substratmaterial. Der Wellenleiter 120 wird durch die Bestrahlung 180 im Vergleich zum Substrat 160 ein optisch dichteres Medium, so dass der Übergangsbereich 126 eine Reflexionsebene für Licht 130, das sich entlang des Wellenleiters 120 ausbreitet, darstellt. Um die Totalreflexion zu erreichen, wird der Winkel zwischen der Ausbreitungsrichtung des Lichts und der Reflexionsebene 126 kleiner als der Grenzwinkel α0, α1 gewählt, wobei per Definition der Grenzwinkel α0, α1 jenen maximalen Winkel bezeichnet, für den noch keine Brechung des Lichts 130 an der Grenzfläche auftritt (bei einem größeren Winkel wird ein Teil des Lichtstrahls an der Grenzfläche gebrochen). Der Grenzwinkel hängt von der Änderung der Brechungsindices an der Grenzfläche ab, so dass der Grenzwinkel α1 zwischen dem bestrahlten und unbestrahlten Polycarbonat i.A. verschieden sein wird von dem Grenzwinkel α0 zwischen dem bestrahlten Polycarbonat und der Umgebung.

Zur Bestrahlung kann beispielsweise ein Laser verwendet werden, der beispielsweise ein UV-Licht mit einer Wellenlänge von ungefähr 355 nm ausstrahlt. Dieser Laser kann sowohl zur Ablation und damit zur Ausbildung eines Kanals als auch zur Umwandlung des Oberflächenbereichs in einen Wellenleiter genutzt werden. Alternativ zu dem UV-Laser mit ca. 355 nm ist es ebenfalls möglich, ein CO₂-Laser mit einer Wellenlänge von ca. 10,6 µm zu verwenden, der ebenfalls den gewünschten Effekt liefert. Daher ist bei der Verwendung von Polycarbonat eine Bestrahlung mit Licht (oder allgemeinen einer elektromagnetischen Strahlung) in einem breiten Wellenlängenbereich möglich (von 200 nm bis beispielsweise 20 µm). Um die Stoffeigenschaften zu ändern, ist die absorbierte Energiemenge wesentlich. Wenn diese einen bestimmten Schwellenwert übersteigt, funktioniert die Umwandlung in einen Wellenleiter innerhalb eines sehr breiten Frequenzspektrums. Daher kann in Abhängigkeit des Substratmaterials auch die genutzte Strahlung optimiert werden. Es ist ebenfalls möglich, den Wellenleiter in einem inneren Substratbereich (in der Tiefe des Substrats) zu erzeugen, beispielsweise durch sich kreuzende Strahlen oder durch eine Fokussierung im Inneren mit hoher numerischer Apertur.

Der Vorteil der beschriebenen Materialien, wie beispielsweise Polycarbonat oder PMMA besteht gerade darin, dass sie zum einen lichtdurchlässig sind und zum anderen ihren Brechungsindex bei einer geeignet gewählten Bestrahlung erhöhen. Wie in der Figur 1 gezeigt, kann dazu ein Oberflächenbereich 161 eines Substrats 160 entsprechend als Wellenleiter 120 umgewandelt werden.

Durch Wahl von optimalen Parametern wird die Bestrahlung optimiert, so dass bei der Laserbearbeitung entweder der Abtrag durch Ablation oder die Umwandlung im Brechungsindex ohne Abtrag bevorzugt werden kann. Als wählbarer Parameter des beispielhaften Lasers stehen dabei beispielsweise die Wellenlänge, die Pulsdauer, die Pulswiederholraten, die Pulsenergie oder mittels Fokussierung die Pulsenergiedichte, die mittlere Leistung und Leistungsdichte zur Verfügung. Auf Seiten der Materialparameter können die Absorption, die Wärmeleitung, die Wärmekapazität, die Verdampfungswärme und die Effektivität für die Umwandlung des Brechungsindexes optimiert werden. Neben Polycarbonat können weitere Kunststoffe verwendet werden. Prinzipiell ist jeder Kunststoff, der eine Veränderung des Brechungsindex bei Bestrahlung zeigt und für einen Wellenleiter ausreichend transparent ist, geeignet. Dieser Effekt ist ebenfalls für PMMA (Polymethylmetacrylat, Plexiglas) bekannt, so dass alternativ auch PMMA als Substratmaterial verwendet werden kann.

Dieses Verfahren kann ebenfalls dazu benutzt werden, um beispielsweise optische Verbindungen für Foliensysteme oder für SmartCards oder für andere opto-elektronische Bauelemente herauszubilden. Das Verfahren kann aber ebenso für die Herstellung einer Lichtwellenleiteranordnung für die optische Kommunikation in Geräten der Informationsverarbeitung wie Computer, Telefone, Kameras und Multimediageräten benutzt werden. Die Lichtwellenleiter können parallel zu den elektrischen Leiterbahnen verlaufen. Ein bevorzugtes Material für SmartCards ist Polycarbonat.

Damit lassen sich folgende Beispiele realisieren. Zum Beispiel kann ein Lichtwellenleiter 120 zur optischen Signalübertragung in einer Lage Polycarbonat, die beispielsweise in mehrlagigen Leiterplatten von elektronischen Geräten ausgebildet ist, erzeugt werden. Ebenso ist es möglich, den Lichtwellenleiter 120 für Informationsanzeigen (z.B. Head-up-display) in Visieren von Schutzhelmen oder Brillengläsern zu nutzen, z.B. um den Träger zu informieren. Ausführungsbeispiele umfassen ebenfalls die Nutzung des Wellenleiters 120 auf 3-dimensional gestalteten Freiformflächen aus Polycarbonat.

Weitere Beispiele nutzen nicht die Wellenleitereigenschaft, sondern basieren auf der lokalen Änderung des Brechungsindexes. Zum Beispiel kann der Bereich 120 für phasenschiebende optische Elemente aus Polycarbonat genutzt werden (da sich die Phasengeschwindigkeit mit der Änderung des Brechungsindexes ebenfalls ändert). Beispiele für solche Elemente sind Fresnellinsen und Phasenmasken. Optional kann der Bereich 120 (mit erhöhtem Brechungsindex) auch für 2-dimensionale Strichcodes (2D Barcode, Datamatrix) in oder auf einem transparenten Körper aus Polycarbonat verwendet werden. Diese Strichcodes lassen sich beispielsweise durch einfaches Laserschreiben auf dem Körper aus Polycarbonat erzeugen. Die Strichcodes können beispielsweise als Sicherheitsmerkmal und Schutz gegen Fälschungen dienen, wobei es hierbei von Nutzen ist, dass die Strichcodes nicht offensichtlich sind, sondern verborgen sind und nur durch eine spezielle Beleuchtung ausgelesen werden können. Schließlich können die Ausführungsbeispiele als Dekor an hochwertigen Flaschen und Designobjekten genutzt werden.

Die Erzeugung einer Lichtwellenleiteranordnung gemäß der Erfindung wird für einen optischen Sensor genutzt, was im folgenden anhand einer Reihe von Ausführungsbeispielen näher beschrieben werden soll.

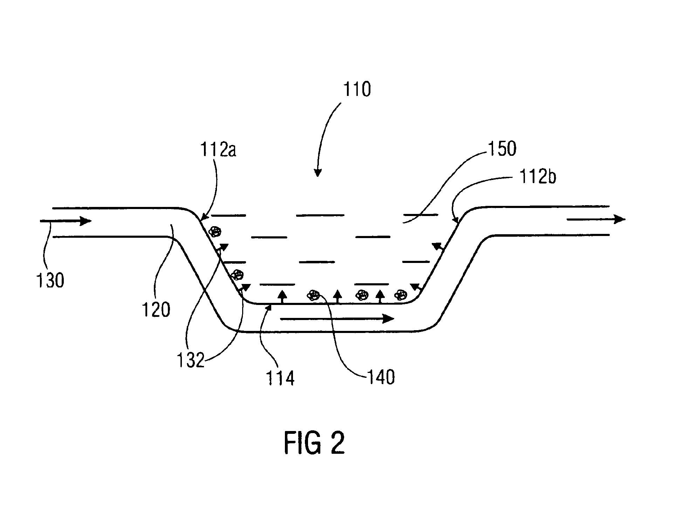

Figur 2 zeigt ein Ausführungsbeispiel für einen solchen optischen Sensor, der einen Kanal 110 mit gegenüber liegenden Seitenwänden 112a, 112b, die durch einen Boden 114 verbunden sind, aufweist. Ferner ist ein Wellenleiter 120 entlang der gegenüberliegenden Seitenwände 112 und entlang des Bodens 114 ausgebildet, so dass Licht 130 beim Passieren des Wellenleiters 120 ein evaneszentes Feld 132 im Kanal 110 erzeugt. Moleküle 140 sind im Kanal 110 durch eine Wechselwirkung mit dem evaneszenten Feld 132 detektierbar. Die Moleküle 140 können beispielsweise in einem Medium 150 gelöst sein, wobei das Medium 150 beispielsweise ein Serum wie Blut oder eine andere organische Substanz umfassen kann. Alternativ kann das Medium 150 auch ein gasförmiger Stoff sein, so dass der optische Sensor beispielsweise Umweltanalysen durchführen kann. Im ersten Fall sind die zu detektierenden Moleküle 140 beispielsweise Analytmoleküle (oder spezielle Proteine) und im letzteren Fall umfassen die Moleküle beispielsweise Umweltverschmutzungen in der Luft, Gewässerproben oder in Abgasen/Abwässer von Industrieanlagen.

Da der Wellenleiter 120 den Kanal 110 großflächig umschließt, können mit der gezeigten Geometrie eine größere Anzahl von Biomolekülen 140 mit dem Licht 130 wechselwirken. Im Vergleich zu konventionellen Sensoren, bei denen der Wellenleiter mit dem Kanal nur von einer Seite her Kontakt hat, ist damit die Detektionssensitivität erhöht.

Wie bereits beschrieben, kann eine derartige Struktur mit dem Kanal 110 und dem Wellenleiter 120 auch durch ein direktes Laserschreiben in Polycarbonat realisiert werden. Dabei kommt es, ausgehend von einem planaren Substrat aus Polycarbonat, unter Bestrahlung (z.B. Einwirkung von ultraviolettem Laserlicht) sowohl zu einem Abtrag von Material und somit zum Ausbilden des Fluidkanals, als auch zu einer Erhöhung des Berechnungsindexes des Polycarbonats an der bearbeiteten Grenzschicht. Die Region mit erhöhtem Brechungsindex führt somit zur Ausbildung eines optischen Wellenleiters an der Grenzfläche zwischen Kanal und Substrat.

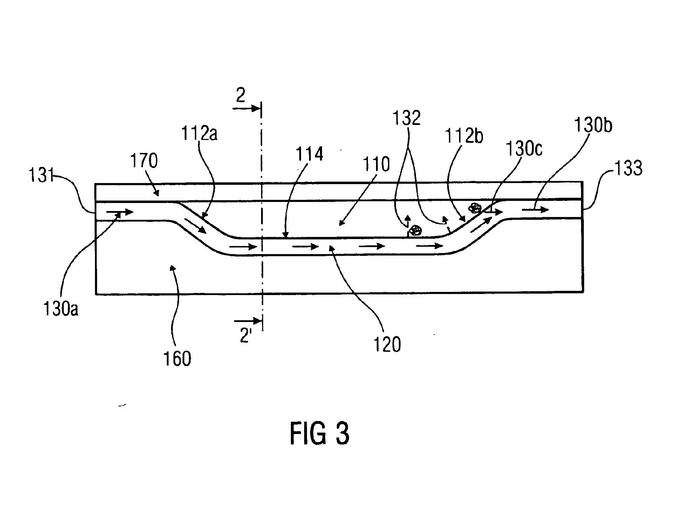

Figur 3 zeigt ein Ausführungsbeispiel für eine Kombination von Wellenleiter 120 und Fluidkanäle 110 zu einem mikroopto-fluidischen System, wobei die gezeigte Schnittansicht entlang eines Fluidkanals 110 dargestellt ist. Das mikroopto-fluidische System weist ein Substrat 160 auf, in dem der Fluidkanal 110 als eine Ausnehmung ausgebildet ist und der Wellenleiter 120 den Fluidkanal 110 sowohl entlang des Bodens 114 als auch entlang der gegenüberliegenden Seitenwände 112a, 112b begrenzt. Außerdem zeigt die Figur 3, dass der Fluidkanal 110 durch einen Deckel 170 geschlossen ist, so dass der Fluidkanal 110 einen Hohlraum bildet, in dem sich das Medium 150 mit den Molekülen 140 ausbreiten kann. Die Deckelung des Fluidkanals 110 kann beispielsweise durch eine plane Platte (z.B. Glasplatte) oder bei weiteren Ausführungsbeispielen auch mit Hilfe eines strukturierten Deckels, der einen weiteren Kanal- und/oder Wellenleiter enthält, erfolgen.

Das Licht 130 wird beispielsweise über einen optischen Eingang 131 in das mikro-fluidische System eingekoppelt und über einen optischen Ausgang 133 ausgekoppelt, wobei die Lichtzuführung/-abführung mittels eines weiteren Wellenleiters (nicht gezeigt) geschehen kann. Das zugeführte Licht 130a gelangt dann entlang des Wellenleiters 120 zu dem Kanal 110, wobei sich in dem Kanal 110 das evaneszente Feld 132 entlang der Kanalwände 112 und des Bodens 114 herausbildet. Das evaneszente Feld 132 kann dann beispielsweise mit den Molekülen 140, die beispielsweise an der Kanalwand immobilisiert sind, wechselwirken, so dass das abgeführte Licht 130b eine andere Charakteristik aufweist als das zugeführte Licht 130a. Aus der Änderung zwischen dem zugeführten Licht 130a und dem abgeführten Licht 130b ist es möglich, eine Wechselwirkung mit den immobilisierten Molekülen 140 zu detektieren. Um die Lichtführung entlang des Wellenleiters 120 zu erleichtern, können die gegenüberliegenden Seitenwände 112a, 112b schräg verlaufen, so dass sie keinen rechten Winkel mit dem Boden 114 bilden, sondern in einem spitzen Winkel (z.B. weniger als 45° oder weniger als 60°) zu diesem verlaufen. Damit wird es möglich, dass das Licht infolge der Totalreflexion von dem Boden 114 in die Seitenwand 112 geleitet wird. Dafür ist es vorteilhaft, wenn der Unterschied der Brechungsindices zwischen dem Substrat 160 und dem Wellenleiter 120 möglichst groß ist. Das Substrat 160 kann beispielsweise Polycarbonat oder PMMA aufweisen.

Die Eindringtiefe des evaneszenten Feldes in das mikrofluidische Medium ist abhängig von der Wellenlänge und dem Unterschied der Brechungsindices von Wellenleiter und Fluid. Typischerweise beträgt die Eindringtiefe einige 100 nm. Die Eindringtiefe des evaneszenten Feldes ist damit etwas höher als die typische Dicke immobilisierter (biomolekularer) Sensorschichten, die beispielsweise einige 10 nm betragen.

Bei weiteren Ausführungsbeispielen wird der Wellenleiter 120 dazu verwendet, im Fluidkanal 110 (vornehmlich nahe der Kanalwände) entstandenes Lumineszenzlicht 130c (Fluoreszenz- oder Phosphoreszenzlicht) in den Wellenleiter 120 einzukoppeln und zu einem Photodetektor (nicht gezeigt) zu transportieren. Die Einkopplung kann wiederum mit Hilfe des evaneszenten Feldes 132 geschehen. Auf diese Weise kann die Emission von Lumineszenzlicht von einem zu detektierenden Stoff gemessen werden. Um die Lumineszenz anzuregen, kann beispielsweise das Medium 150 durch eine externe Strahlungsquelle (nicht gezeigt) angeregt werden, wobei die Anregungsstrahlung beispielsweise eine andere Wellenlänge aufweist als die Lumineszenzstrahlung und somit herausgefiltert werden kann.

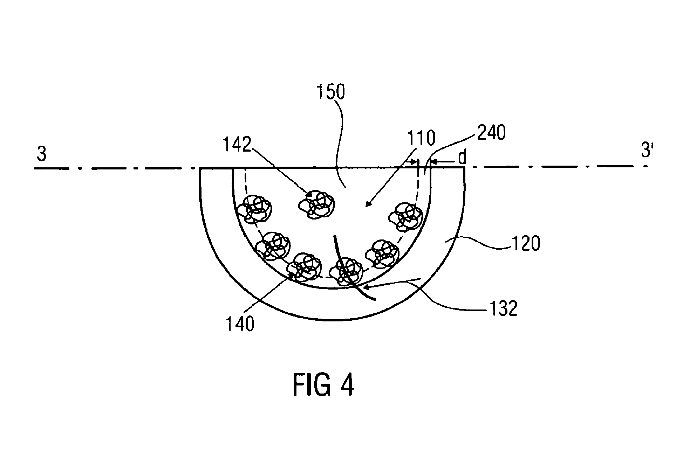

Figur 4 zeigt eine Querschnittsansicht durch einen Fluidkanal 110 entlang der Schnittlinie 2-2', der von dem optischen Wellenleiter 120 umgeben ist. In dem Fluidkanal 110 sind zu detektierende Moleküle 142 (z. B. Analytmoleküle) in dem Fluid 150 gelöst. Entlang der Seitenwände 112 befinden sich die immobilisierten Analytmoleküle 140, die mit dem evaneszenten Feld 132 der Wellenleitermodi (die Normalkomponente bzgl. der Wellenleiteroberfläche) wechselwirken. Diese Wechselwirkung kann beispielsweise eine Absorption der evaneszenten Wellenleitermodi 132 umfassen und die dadurch verursachte "Leckrate" kann anhand des durchgeleiteten Lichtes detektiert werden. In dem gezeigten Ausführungsbeispiel erfolgt die Lichtausbreitung beispielsweise senkrecht zur Zeichenebene (siehe Schnittlinie 2-2' in Fig. 3).

Die besagte Änderung zwischen dem zugeführten Licht 130a und dem abgeführten Licht 130b infolge der Wechselwirkung des evaneszenten Feldes 132 mit den immobilisierten Molekülen 140 kann beispielsweise eine Farbänderung umfassen, wenn die immobilisierten Analytmoleküle 140 einen bestimmten Frequenzanteil des durchgeleiteten Lichtes 130 absorbieren. Im einfachsten Fall wird jedoch lediglich die Intensität des durchgeleiteten Lichtes 130 infolge der Absorption des evaneszenten Feldes sich ändern. Das durchgeleitete Licht 130 kann beispielsweise monochromatisches Licht, das durch einen Laser erzeugt wird, sein. Die Wellenlänge des genutzten Lichts kann dazu an die zu detektierenden Moleküle 140 angepasst werden, so dass während des Betriebs auch Licht 130 unterschiedlicher Wellenlänge (nacheinander) zur Detektion unterschiedlicher Moleküle 140 genutzt werden kann.

Um die Analytmoleküle 140 an der Kanalwand 112 zu immobilisieren, kann optional eine Immobilisierungsschicht 240 (Sensorschicht) an der Kanalwand 112 und/oder Boden 114 ausgebildet sein. Die Immobilisierungsschicht 240 kann beispielsweise Reagenzien aufweisen, die sensitiv für bestimmte Analytmoleküle 140 sind, so dass diese bestimmten Analytmoleküle 140 bevorzugt an der Kanalwand 112 und/oder Boden 114 immobilisieren werden bzw. leicht andocken können. Durch diese Reaktion mit den Reagenzien können sich optische Eigenschaften der Immobilisierungsschicht 240 ändern, die dann gezielt mittels des evaneszenten Feldes 132 detektiert werden können. Damit ist es beispielsweise möglich, ganz gezielt die Sensitivität für bestimmte Analytmoleküle, die beispielsweise nur in einer sehr geringen Konzentration vorkommen, zu erhöhen. Die Immobilisierungsschicht 240 kann beispielsweise derart ausgebildet sein, dass die immobilisierten Analytmoleküle 140 eine Schichtdicke aufweisen, die der Eindringtiefe des evaneszenten Feldes 132 in den Kanal 110 entspricht. Die Eindringtiefe des evaneszenten Feldes beträgt beispielsweise einige 100 nm. Um eine möglichst effiziente Durchdringung der immobilisierten Analytmoleküle 140 zu erreichen, kann die beschriebene Sensorschicht 240 beispielsweise eine Dicke d aufweisen von 10 nm oder in einem Bereich zwischen 1 nm und 100 nm oder zwischen 5 nm und 100 nm oder in einem Bereich zwischen 10 nm und 50 nm liegen. Die Ausdehnung des Kanals 110 senkrecht zur Flussrichtung (= transversale Ausdehnung) des Fluids 150 kann beispielsweise so gewählt sein, dass das Fluid 150 infolge von Kapillarkräften in den Kanal 110 hineinströmt, z.B. kann die maximale transversale Ausdehnung weniger als 3 mm oder weniger als 1 mm betragen (oder < 50 µm, < 100 µm, < 500 µm sein).

Entlang der Linie 3-3' kann beispielsweise der Deckel 170 aus der Fig. 3 oder eine Platte angeordnet werden. Alternativ kann der Deckel 170 strukturiert sein kann, so dass der Deckel 170 ebenfalls einen Lichtleiter an seiner dem Kanal 110 zugewandten Seite aufweist. Optional ist es jedoch ebenfalls möglich, zwei Kanalstrukturen, wie sie in der Figur 4 gezeigt sind, entlang der Linie 3-3' miteinander spiegelsymmetrisch zu verbinden.

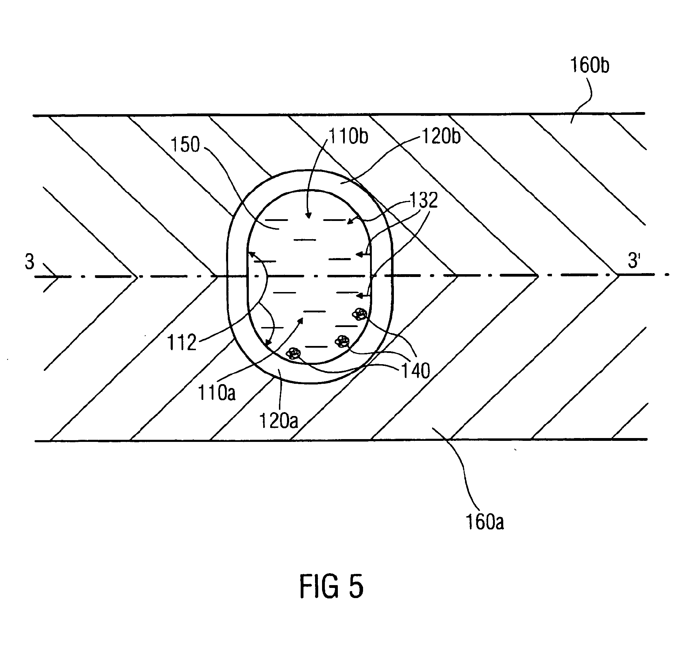

Figur 5 zeigt ein Ausführungsbeispiel, bei dem wie gesagt zwei Kanalstrukturen, wie sie in der Figur 4 gezeigt sind, entlang der Linie 3-3' miteinander verbunden wurden. Dementsprechend ist bei dem Ausführungsbeispiel in der Figur 5 der Kanal 110 einerseits durch einen ersten Lichtleiter 120a und auf der gegenüber liegenden Seite durch einen zweiten Lichtleiter 120b seitlich begrenzt. Der erste Lichtleiter 120a ist dabei in einem ersten Substrat 160a und der zweite Lichtleiter 120b in einem zweiten Substrat 160b ausgebildet. Das erste Substrat 160a weist dazu eine Ausnehmung auf, die Teil des Kanals 110a bildet und an dessen Oberfläche der erste Lichtleiter 120a ausgebildet ist, so dass der erste Lichtleiter 120a den ersten Kanalteil 110a begrenzt. In gleicher Weise weist das zweite Substrat 160b eine Ausnehmung auf, die den zweiten Teil des Kanals 110b bildet, wobei wiederum zwischen dem zweiten Teil des Kanals 110b und dem zweiten Substrat 160b der zweite Lichtleiter 120b ausgebildet ist. Der erste und zweite Teil des Kanals 110a,b werden zum Kanal 110 kombiniert, der beispielsweise rundum durch den Wellenleiter 120 (d.h. dem ersten und dem zweiten Lichtwellenleiter 120a,b) umrandet ist.

Die Lichtführung bei dem Ausführungsbeispiel, wie es in Figur 5 gezeigt ist, kann beispielsweise parallel zu der Flussrichtung in dem Kanal 110 erfolgen (z.B. senkrecht zur Zeichenebene), wobei wiederum das Fluid 150 in dem Kanal 110 die Analytmoleküle 140 aufweist, die sich jetzt an Kanalwänden 112 beider Lichtleiter 120a,b niederschlagen können. Alternativ ist es ebenfalls möglich, die Lichtführung derart zu wählen, dass das Licht 130 sich senkrecht zur Flussrichtung in dem Kanal 110 ausbreitet. Dies kann beispielsweise dadurch erreicht werden, dass Zu- und Ableitungen für das Licht entlang der Linie 3-3' ausgebildet werden (wie beispielsweise in der Figur 1 gezeigt).

Indem der Kanal 110 vollständig durch den Wellenleiter 120 umschlossen wird, wie es in dem Ausführungsbeispiel der Fig. 5 der Fall ist, werden alle an den Kanaloberflächen immobilisierten Biomoleküle mit dem evaneszenten Feld in Kontakt kommen. Somit werden gleichzeitig die Wechselwirkungsmöglichkeiten mit den immobilisierten Analytmolekülen 140 entlang der Kanalwände 112 und damit die Sensitivität maximiert. Der Durchmesser des Kanals 110 bzw. die maximale Ausdehnung des Kanals 110 kann beispielsweise so klein gewählt werden, dass das evaneszente Feld 132 den Kanalquerschnitt (in der Schnittebene der Fig. 4) vollkommen durchsetzt, so dass alle Analytmoleküle in dem Medium 150 mit dem evaneszenten Feld 132 in Wechselwirkung treten können. Um jedoch die vorteilhafte Wirkung des optischen Sensors zu erreichen, ist es häufig ausreichend, wenn nur die an der Kanalwand gebundenen Moleküle erfasst werden. Der Querschnitt des Kanals 110 kann beispielsweise oval oder ellipsenförmig, kreisförmig oder auch quadratisch oder rechteckig sein. Um jedoch eine effiziente Lichtführung mit möglichst wenig Verlusten (z.B. durch Streuungen in das Substrat 160) entlang des Wellenleiters 120 zu erreichen, ist es vorteilhaft, wenn der Wellenleiter 120 entlang der Lichtführung oder der Lichtausbreitung möglichst keine oder nur schwache Neigungen oder Krümmungen aufweist. Daher kann es vorteilhaft sein, wenn die Lichtführung parallel zur Flussrichtung des Mediums 150 gewählt wird. Wie zuvor beschrieben, kann aus einem Vergleich des zugeleiteten Lichtes 130a und des abgeleiteten Lichtes 130b auf die Absorption des evaneszenten Feldes 132 geschlossen werden, wobei wiederum entweder Farbänderungen oder auch Intensitätsänderungen detektierbar sind.

Das erste und zweite Substrat 160a,b und der erste und zweite Lichtleiter 120a,b können beispielsweise ursprünglich aus einem gleichen Material geformt sein, wobei der erste und zweite Lichtleiter 120a,b beispielsweise durch eine Laserbehandlung an der Oberfläche des Substrats 160 gebildet werden kann. Alternativ kann der Wellenleiter 120 auch durch eine Einstrahlung mit Licht einer bestimmten Wellenlänge (z.B. UV-Licht) erzeugt werden, wobei die Intensität und die Wellenlänge des genutzten Lichts so gewählt sind, dass der Brechungsindex des Materials sich in dem Einstrahlbereich ändert. Dieses Material ist Polycarbonat. Durch die Änderung des Brechungsindexes mittels Bestrahlung innerhalb der Wellenleiterregion 120 ändert das Material somit im Vergleich zum Substrat 160 sein optisches Verhalten. Um Verwechselungen auszuschließen, ist darauf hinzuweisen, dass das Licht in dem Wellenleiter 120 von der Bestrahlung zur Erzeugung des Wellenleiters 120 verschieden ist. Während das erste im Allgemeinen im sichtbaren Spektralbereich liegen wird, wird die Bestrahlung in der Regel außerhalbe des sichtbaren Spektralbereichs liegen. Auch in der genutzten Intensität werden sich beide elektromagnetische Wellen unterscheiden.

Ausführungsbeispiele der vorliegenden Erfindung lassen sich somit wie folgt zusammenfassen. Sie umfassen die Herstellung eines Wellenleiters 120 in einem Substrat 160 durch Bestrahlung, wobei das Substrat 160 Polycarbonat aufweist. Dieses Verfahren kann beispielsweise für die Herstellung eines optischen Sensors mit einem Kanal 110, der zumindest teilweise mit einem optischen Wellenleiter 120 umhüllt ist, genutzt werden. Der optische Sensor kann optional mit an der Oberfläche 112 immobilisierten biologischen oder chemischen Molekülen eine Veränderung des Lichts im angrenzenden Wellenleiter 120 bewirken. Die Veränderung des Lichts 130 im Wellenleiter 120 erfolgt durch eine Absorption des evaneszenten Feldes 132 des Wellenleiters 120 oder durch eine Einkopplung von Fluoreszenzlicht in den Welleleiter. Der optische Sensor ist dabei ausgebildet, um entweder die Absorption des evaneszenten Feldes 132 oder aber das eingekoppelte Fluoreszenzlicht 130c in den Wellenleiter 120 zu detektieren. Bei weiteren Ausführungsbeispielen wird der Sensor für die Detektion von chemischen oder biologischen Stoffen in einem flüssigen oder gasförmigen Fluid 150 verwendet. Weitere Ausführungsbeispiele umfassen ebenfalls ein Verfahren zur Herstellung des Sensors mittels eines Lasers oder mittels UV-Licht.

Da das Medium 150 entweder flüssig oder gasförmig ist, sind ebenfalls Verunreinigungen beispielsweise in der Luft oder in Abgasen oder in Abwässern feststellbar. Der Sensor ist daher für die Messung der Luftverschmutzung innerhalb von Stadtgebieten nutzbar. Andere Bestandteile wie beispielsweise Pollen können ebenfalls in der Luft detektiert werden. Ebenso ist es möglich, den Sensor für biologische Untersuchungen zu nutzen, um beispielsweise spezielle Analytmoleküle oder Proteine, die einen Hinweis auf bestimmte Krankheiten liefern können (z.B. Marker) in hoher Präzision zu messen.

Ein Vorteil der Ausführungsbeispiele, welche ein Laserschreiben nutzen, ist die Erzeugung von Kanälen für mikrofluidische Anwendungen, bei denen der mikrofluide vorteilhafte Kanalquerschnitt abgerundete Ecken aufweist.

## Patentansprüche

1. Verfahren zum Erzeugen eines Bereiches (120) mit erhöhtem Brechungsindex, mit folgenden Schritten:
Bereitstellen eines Substrats (160) aus Polycarbonat;
Ausbilden eines Kanals (110) mit gegenüberliegenden Seitenwänden (112a, 112b), die durch einen Boden (114) verbunden sind, durch eine Ablation mittels Bestrahlung; und
Erzeugen des Bereichs (120) mit erhöhtem Brechungsindex als einen Lichtwellenleiter im Substrat (160) entlang der gegenüberliegenden Seitenwände (112a, 112b) und entlang des Bodens (114) mittels Bestrahlung, so dass Licht (130) beim Passieren des Lichtwellenleiters (120) ein evaneszentes Feld (132) im Kanal (110) erzeugt und Moleküle (140) im Kanal (110) durch eine Wechselwirkung mit dem evaneszenten Feld (132) detektierbar sind.

2. Verfahren nach Anspruch 1, bei dem der Schritt des Erzeugens des Bereichs (120) eine Verwendung eines UV-Laser oder eines IR-Laser umfasst.

3. Verfahren nach einem der vorhergehenden Ansprüche, bei dem der Schritt des Erzeugens des Bereichs (120) eine Verwendung einer Strahlung (180) mit einer Wellenlänge in einem Bereich zwischen 300 nm und 400 nm oder in einem weiteren Bereich zwischen 9 µm und 11 µm umfasst.

4. Verfahren nach einem der vorhergehenden Ansprüche, bei dem das Ausbilden des Kanals (110) mit gegenüberliegenden Seitenwänden (112a, 112b), die durch einen Boden (114) verbunden sind, durch Ablation mittels einer ersten Bestrahlung und das Erzeugen des Bereichs (120) mit erhöhtem Brechungsindex mittels einer zweiten Bestrahlung durchgeführt werden, wobei sich die erste Bestrahlung von der zweiten Bestrahlung hinsichtlich der Intensität, Wellenlänge, Pulsfrequenz oder Pulslänge unterscheidet.

5. Verfahren nach einem der vorhergehenden Ansprüche, bei dem der Schritt des Ausbildens des Kanals (110) oder der Schritt des Erzeugens des Lichtwellenleiters (120) eine Verwendung einer Maske umfasst.

6. Substrat aus Polycarbonat, wobei das Substrat einen unbestrahlten Bereich (160) mit einem ersten Brechungsindex und einen bestrahlten Bereich (120) mit einem zweiten Brechungsindex aufweist,
wobei aufgrund der Bestrahlung der erste Brechungsindex kleiner als der zweite Brechungsindex ist,
wobei der bestrahlte Bereich (120) einen Lichtwellenleiter bildet, und
wobei das Substrat ferner einen Kanal (110) mit gegenüberliegenden Seitenwänden (112a, 112b), die durch einen Boden (114) verbunden sind, aufweist, und der Lichtwellenleiter (120) entlang der gegenüberliegenden Seitenwände (112a, 112b) und entlang des Bodens (114) ausgebildet ist, so dass Licht (130) beim Passieren des Lichtwellenleiters (120) ein evaneszentes Feld (132) im Kanal (110) erzeugt und Moleküle (140) im Kanal (110) durch eine Wechselwirkung mit dem evaneszenten Feld (132) detektierbar sind.

7. Substrat nach Anspruch 6, bei dem die gegenüberliegenden Seitenwände (112a, 112b) eine Immobilisierungsschicht (240) aufweisen und die Immobilisierungsschicht (240) ausgebildet ist, um die Moleküle (140) durch Wechselwirkung mit Reagenzien zu immobilisieren.

8. Substrat nach Anspruch 7, bei dem das evaneszente Feld (132) in den Kanal (110) bis zu einer Eindringtiefe messbar ist und bei dem die Immobilisierungsschicht (140) eine Schichtdicke (d), die kleiner als die Eindringtiefe ist, aufweist.

9. Substrat nach einem der Ansprüche 6 bis 8, bei dem der Kanal (110) ausgebildet ist, ein Medium (150) in Flussrichtung zur transportieren und bei dem der Lichtwellenleiter (120) senkrecht zur Flussrichtung des Mediums (150) um den Kanal (110) herum ausgebildet ist.

10. Substrat nach einem der Ansprüche 6 bis 9, das ferner eine Abdeckung (170) aufweist und die Abdeckung eine Begrenzung entlang der gegenüber dem Boden (114) liegenden Seite darstellt.

11. Substrat nach einem der Ansprüche 6 bis 10, das ferner einen Photodetektor aufweist, wobei der Photodetektor ausgebildet ist, um eine Änderung in der Intensität oder spektralen Zusammensetzung des Lichts (130) beim Passieren des Lichtwellenleiters (120) zu detektieren.

## Claims

1. Method of creating an area (120) having an increased refractive index, comprising:
providing a substrate (160) made of polycarbonate;
forming a channel (110) having opposing sidewalls (112a, 112b) connected by a bottom (114) by ablation by means of irradiation; and
creating the area (120) having the increased refractive index as an optical waveguide within the substrate (160) along the opposing sidewalls (112a, 112b) and along the bottom (114) by means of irradiation, so that while passing through the optical waveguide (120), light (130) generates an evanescent field (132) within the channel (110), and molecules (140) within the channel (110) are detectable by an interaction with the evanescent field (132).

2. Method as claimed in claim 1, wherein the step of creating the area (120) includes utilization of a UV laser or an IR laser.

3. Method as claimed in any of the previous claims, wherein the step of creating the area (120) includes utilization of radiation (180) having a wavelength within a range from 300 nm to 400 nm or within a further range from 9 µm to 11 µm.

4. Method as claimed in any of the previous claims, wherein said formation of the channel (110) having opposing sidewalls (112a, 112b) connected by a bottom (114) is performed by ablation via a first irradiation, and said creation of the area (120) having an increased refractive index is performed by means of a second irradiation, the first irradiation differing from the second irradiation with regard to intensity, wavelength, pulse rate or pulse length.

5. Method as claimed in any of the previous claims, wherein the step of forming the channel (110) or the step of producing the optical waveguide (120) includes utilizing a mask.

6. Substrate made of polycarbonate, the substrate comprising a non-irradiated area (160) having a first refractive index and an irradiated area (120) having a second refractive index,
the first refractive index being smaller than the second refractive index on account of the irradiation,
the irradiated area (120) forming an optical waveguide, and
the substrate further comprising a channel (110) having opposing sidewalls (112a, 112b) connected by a bottom (114), and the optical waveguide (120) being configured along the opposing sidewalls (112a, 112b) and along the bottom (114), so that while passing through the optical waveguide (120), light (130) generates an evanescent field (132) within the channel (110), and molecules (140) within the channel (110) are detectable by an interaction with the evanescent field (132).

7. Substrate as claimed in claim 6, wherein the opposing sidewalls (112a, 112b) comprise an immobilization layer (240), and the immobilization layer (240) is configured to immobilize the molecules (140) by means of an interaction with reagents.

8. Substrate as claimed in claim 7, wherein the evanescent field (132) within the channel (110) is measureable up to a penetration depth, and wherein the immobilization layer (140) comprises a layer thickness (d) which is smaller than the penetration depth.

9. Substrate as claimed in any of claims 6 to 8, wherein the channel (110) is configured to transport a medium (150) in the flow direction, and wherein the optical waveguide (120) is configured perpendicularly to the flow direction of the medium (150) around the channel (110).

10. Substrate as claimed in any of claims 6 to 9, further comprising a cover (170), the cover representing a boundary along the side opposing the bottom (114).

11. Substrate as claimed in any of claims 6 to 10, further comprising a photodetector, the photodetector being configured to detect a change in the intensity or spectral composition of the light (130) when it passes the optical waveguide (120).

## Revendications

1. Procédé permettant de produire une zone (120) à indice de réfraction plus élevé, aux étapes suivantes consistant à:
préparer un substrat (160) en polycarbonate;
former un canal (110) à parois latérales opposées (112a, 112b) reliées par un fond (114), par ablation au moyen d'une irradiation; et
produire la zone (120) à indice de réfraction plus élevé comme guide d'ondes dans le substrat (160) le long des parois latérales opposées (112a, 112b) et le long du fond (114) au moyen d'une radiation, de sorte que la lumière (130) génère, lors du passage du guide d'ondes (120), un champ évanescent (132) dans le canal (110) et que les molécules (140) dans le canal (110) soient détectables par une interaction avec le champ évanescent (132).

2. Procédé selon la revendication 1, dans lequel l'étape de production de la zone (120) comporte une utilisation d'un laser UV ou d'un laser IR.

3. Procédé selon l'une des revendications précédentes, dans lequel l'étape de production de la zone (120) comporte une utilisation d'un rayonnement (180) à longueur d'onde dans une plage comprise entre 300 nm et 400 nm ou dans une autre plage comprise entre 9 µm et 11 µm.

4. Procédé selon l'une des revendications précédentes, dans lequel la formation du canal (110) à parois latérales opposées (112a, 112b) reliées par un fond (114) est réalisée par ablation au moyen d'une première irradiation et la production de la zone (120) à indice de réfraction plus élevé à l'aide d'une deuxième irradiation, la première irradiation différant de la deuxième irradiation en ce qui concerne l'intensité, la longueur d'onde, la fréquence d'impulsion ou la longueur d'impulsion.

5. Procédé selon l'une des revendications précédentes, dans lequel l'étape de formation du canal (110) ou l'étape de génération du guide d'ondes (120) comporte une utilisation d'un masque.

6. Substrat en polycarbonate, dans lequel le substrat présente une zone non irradiée (160) avec un premier indice de réfraction et une zone irradiée (120) avec un deuxième indice de réfraction,
dans lequel le premier indice de réfraction est, du fait de l'irradiation, inférieur au deuxième indice de réfraction,
dans lequel la zone irradiée (120) forme un guide d'onde, et
dans lequel le substrat présente par ailleurs un canal (110) à parois latérales opposées (112a, 112b) reliées par un fond (114), et le guide d'ondes (120) est formé le long des parois latérales opposées (112a, 112b) et le long du fond (114) de sorte que la lumière (130) génère, lors du passage du guide d'ondes (120), un champ évanescent (132) dans le canal (110) et les molécules (140) dans le canal (110) soient détectables par une interaction avec le champ évanescent (132).

7. Substrat selon la revendication 6, dans lequel les parois latérales opposées (112a, 112b) présentent une couche d'immobilisation (240) et la couche d'immobilisation (240) est réalisée pour immobiliser les molécules (140) par interaction avec des réactifs.

8. Substrat selon la revendication 7, dans lequel le champ évanescent (132) peut être mesuré dans le canal (110) jusqu'à une profondeur de pénétration et dans lequel la couche d'immobilisation (140) présente une épaisseur de couche (d) inférieure à la profondeur de pénétration.

9. Substrat selon l'une des revendications 6 à 8, dans lequel le canal (110) est réalisé pour transporter un fluide (150) dans la direction de circulation et dans lequel le guide d'ondes (120) est réalisé perpendiculairement à la direction de circulation du fluide (150) autour du canal (110).

10. Substrat selon l'une des revendications 6 à 9, présentant par ailleurs un recouvrement (170) et le recouvrement représente une délimitation le long de la face opposée au fond (114).

11. Substrat selon l'une des revendications 6 à 10, présentant par ailleurs un photo-détecteur, dans lequel le photo-détecteur est réalisé pour détecter une variation de l'intensité ou de la composition spectrale de la lumière (130) lors du passage du guide d'ondes (120).
